(19) **Europäisches Patentamt**

**European Patent Office**

**Office européen des brevets**

(11) **EP 1 195 088 A1**

(12) **EUROPEAN PATENT APPLICATION**

(43) Date of publication:
**10.04.2002 Bulletin 2002/15**

(51) Int Cl.[7]: **A01K 61/00**

(21) Application number: **00870224.3**

(22) Date of filing: **05.10.2000**

(84) Designated Contracting States:
**AT BE CH CY DE DK ES FI FR GB GR IE IT LI LU MC NL PT SE**
Designated Extension States:
**AL LT LV MK RO SI**

(71) Applicant: **Inve Technologies N.V.**
**9200 Baasrode (BE)**

(72) Inventors:
- **Naessens, Eddy**
  **9840 De Pinte (BE)**
- **Trackaert, Wim**
  **Grantsville, UT 84029 (US)**

- **van Nieuwenhove, Luk**
  **2170 Antwerpen (BE)**
- **Newman, Howard W.**
  **Klamath Falls, Oregon 97601 (US)**
- **Merchie, Greet**
  **9200 Baasrode (BE)**

(74) Representative: **Van Reet, Joseph et al**
**Gevers & Vander Haeghen,**
**Patent Attorneys,**
**Rue de Livourne 7**
**1060 Brussels (BE)**

(54) **Method for producing free swimming Artemia nauplii and packaged cysts for use in that method**

(57)    A method for producing free swimming Artemia nauplii starting from a quantity of Artemia cysts, including diapauzing cysts, by incubating the cysts in a hatching medium, in a density which comprises maximally about 5 g cyst dry matter per litre hatching medium. In order to break diapause in the diapauzing cysts to increase the hatching percentage an amount of hydrogen peroxide, selected within the range between 0.5 and 30 mg/l, is introduced in the hatching medium either by adding a hydrogen peroxide solution or a compound such as calcium or magnesium peroxide which produces hydrogen peroxide when being added to the hatching medium. An advantage of these solid hydrogen peroxide producing compounds is that they can be mixed with the cysts in the appropriate amount and added, together with the cysts, to the hatching medium.

**EP 1 195 088 A1**

**Description**

The present invention relates to a method for producing free swimming Artemia nauplii starting from a quantity of Artemia cysts, including diapauzing cysts, by incubating the cysts in a hatching medium, in a density which comprises maximally about 5 g cyst dry matter per litre hatching medium, for a predetermined incubation period and under conditions allowing at least a portion of the cysts to hatch and to release free swimming nauplii within this predetermined incubation period, in which method the cysts are brought in contact with hydrogen peroxide to break diapause in at least a number of said diapauzing cysts in order to enable them to produce free swimming nauplii within said predetermined incubation period thereby increasing the hatching percentage of the incubated cysts from X % of the total number of full cysts when the cysts are not brought in contact with said hydrogen peroxide to a hatching percentage higher than X % when they are brought in contact with said hydrogen peroxide.

Artemia nauplii are commonly used as live food organisms in aquaculture, more particularly as live food for the early larval stages of marine fish and shrimp. The Artemia nauplii as live food are not marketed as such but as Artemia cysts out of which the nauplii can be hatched. Hatching of the cysts is done by incubating them in a hatching medium for an incubation period that is typically shorter than 24 hours so that every day a new supply of free swimming nauplii can be produced using the same hatching infrastructure.

In the encysted embryos or cysts of Artemia the animal's embryonic development is halted (or enters diapauze) at the gastrula stage. As such released by the female into the aquatic environment these diapauzing or dormant embryos will not further develop into free swimming nauplii when subjected to otherwise hatching promoting environmental conditions. Development will only resume when the diapauze controlling mechanisms are de-activated by external stimuli. In the natural environment cold shock (hibernation) and dehydration are known to terminate the diapauze. The thus activated (or quiescent) embryo can resume development when incubation conditions permit.

Diapauzing as well as quiescent cysts can survive long periods of dehydration and anoxia, extreme temperatures and pressure. In the natural environment such resistance is a survival strategy of the species since cysts are often temporarily the only living stage of the animal in a given biotope. Outside their natural environment, when sufficiently dehydrated and properly stored i.e. in a dry environment, preferably at low temperatures and away from light and oxygen, the cysts remain viable for a considerable period of time (several years). This property of prolonged storability and consequent year-round off-the-shelf availability, together with the short incubation time needed to produce the free swimming nauplii makes them the most convenient, least labour-intensive source of live food for aquaculture (Van Stappen, 1996).

The abiotic parameters of the incubation medium to be observed during conventional incubation of the cysts are the salinity, the pH, the oxygen concentration and the temperature of the water during the incubation. Van Stappen (1996) discusses each of these parameters and provides the ranges that ascertain the optimal hatching of quiescent cysts (i.e. maximal production of free swimming nauplii):

- salinity: 5-35 gram of dissolved salts per liter
- pH: > 8
- oxygen: > 2 gram per liter, preferably > 5 gram per liter
- temperature: 25-28 °C

As to facilitate the resumption of the embryonic development during incubation the light intensity at the water surface should be not less then 2000 lux. Van Stappen (1996) further indicates that best results are obtained when the incubator tanks are equipped with a conical bottom part and when the cyst density does not exceed 2 gram of cysts per liter.

Artemia cysts for later aquaculture applications are collected from the natural environment. In such harvested raw product quiescent and diapauzing cysts are present in varying proportions. The dry, ready to use commercial product is obtained after the application of a series of processing and conditioning procedures. In the processing the raw product is purified (removal of debris), washed (removal of salt) and finally dried. Standard conditioning techniques typically try to copy natural conditions of hibernation (storage in cooled warehouses) and/or desiccation (drying with heated air as part of the processing procedures) and mostly result in the de-activation of the diapauze mechanism in virtually all of the individual cysts.

The overall quality of a given cyst sample is judged according to a number of characteristics. The properties most often taken into account to qualify cyst samples are the purity of the cysts (e.g. fraction of cysts with broken shells, the percentage of impurities such as empty shells, shell fragments, sand and/or other debris); the biometrics of the cysts and the nauplii (diameter of the cysts, length and width of the nauplii); the nutritional value of the nauplii for the larval fish and shrimp (e.g. the contents of HUFA's); the contamination of the cysts and eventually the nauplii with toxic substances such as e.g. heavy metals and pesticides; and the hatchability of the cysts. From an economical point of view this latter characteristic is the most looked at since it directly indicates the quantity of life food (nauplii) that can be obtained from a given quantity of cysts under optimal hatching conditions. It can be expressed in a number of generally accepted ways (see Van Stappen, 1996): the hatching percentage (H% : the number of free swimming nauplii that emerge from 100 full cysts), the hatching efficiency (Heff: the number of free swimming nauplii that hatch out of one gram of cyst product), the hatching output (Houtput : the weight of free swimming nauplii that hatch out of one gram of cyst product). The mutual comparison and classification of cyst samples on the basis of hatching characteristics is only valid when the latter were determined under identical experimental conditions in each sample. These conditions must take into account the optimal ranges of a number of critical abiotic parameters as discussed by Van Stappen (1996).

Hatching occurs only in quiescent cysts and under permissible environmental conditions. It is actually the result of a complex and integrated sequence of events of which it is well accepted that they can be grouped into 3 distinct phases (Clegg and Conte, 1980).

The first phase in the hatching process is the so-called pre-emergency development (PED). Depending on incubation conditions the PED lasts about 6-18 hours (Clegg and Conte, 1980). This phase ends with the breaking of the cysts' shell and the future nauplius becomes partially visible through the ruptured shell wall (Hofmann and Hand, 1990a). This stage of the hatching cyst is called the E1-stage (Nakanishi et al., 1962, Clegg and Conte, 1980). During PED there is no increase of the number of cells (Nakanishi et al., 1962), nor is there evidence of DNA synthesis (Nakanishi et al., 1963). Changes of the embryo are situated on the sub cellular level and comprise amongst others the maturation of mitochondria, the structural, quantitative and qualitative changes of the yolk platelets, the activation of some enzyme systems and the partial consumption of stored energy (Hofmann and Hand, 1990a; Hofmann and Hand, 1990b ; Hand, 1993; Clegg, 1997).

During the second phase of the hatching process the E1-stage protrudes increasingly further from the shell until, after about 2 hours following the completion of the PED (Clegg and Conte, 1980), it becomes entirely visible. At this moment the embryonic development stage is called E2-stage or umbrella stage. The E2-stage is surrounded by a hatching membrane, which also provides the last connection of the embryo with the now empty cyst shell.

Upon a further 2-4 hours of incubation the hatching membrane ruptures and the now fully developed nauplius larvae (N-1 stage or first stage nauplius) is released in the surrounding medium (actual hatching or third phase in the overall hatching process), Clegg and Conte (1980).

Hatchability (be it measured as H%, Heff or Houtput) takes into account the final result of the hatching process i.e. the free-swimming nauplius. No indications are given about the different hatching phases that precede the release of the free-swimming nauplius. Therefore hatchability is not necessarily an indicator of the viability of the encysted embryo. The reasons for which embryo's of the E1-stage (=after having completed PED) are sometimes unable to proceed to the stage of the free swimming nauplius are mostly related to inadequate incubation conditions. However, factors inherent to the cysts may also cause this problem (e.g. insufficient amount of stored energy). Furthermore, in some Artemia strains or in some batches within the same strain a more or less large number of embryo's, although viable, are not able to start PED and consequently do not reach the E1-stage. For such strains or batches the till that moment applied processing and/or conditioning techniques have obviously failed to de-activate the diapauze in all of the individual cysts and in order to obtain the maximal number of free swimming naupllii supplementary and more specific diapauze deactivating procedures will be necessary (Van Stappen, 1996). Described procedures include a.o. prolonged cold storage of dried cysts, repeated hydration-dehydration cycles, short time incubation in a solution of specific chemicals (e.g. hydrogen peroxide). These techniques are strain and batch specific and moreover, the cysts frequently respond in an erratic way. When not properly executed even adverse results are obtained (e.g. incubation in chemical solutions under inadequate time-dose combinations). These techniques are to be applied in addition and after the processing techniques that till that moment had been applied, i.e. by the user of the cysts. They require from the latter a lot of work, skill and sufficient general Artemia background knowledge as well as specific information about the particular strain or batch to be treated. Absence of this will be the origin of mistakes and/or undesirable results. The user-unfriendly nature of these specific, supplementary diapauze de-activating techniques eliminates one of the main advantages of Artemia cysts: a source of readily available fresh food for aquaculture.

A method wherein use is made of hydrogen peroxide for increasing the hatching percentage of Artemia cysts including diapauzing cysts is disclosed for example by Van Stappen et al. (1998). In the disclosed method, the cysts are prehydrated in tap water for a period of 30 to 180 minutes and are subsequently treated in a hydrogen peroxide solution diluted with deionized water to concentrations of 1, 5, 10, 20 or 27% (w/w). After treatment times of 1, 5, 10, 20 or 30 minutes, the cysts are collected on a sieve, rinsed thoroughly with tap water in order to remove traces of $H_2O_2$, and incubated in seawater under standard hatching conditions outlined in Sorgeloos et al (1986). This re-incubation of the cysts in seawater after removal of the hydrogen peroxide is an essential step of this known method since, as mentioned by the authors, the applied level of $H_2O_2$-concentration is generally recognised as lethal for any animal cell.

A drawback of this known method is that the treatment time and the applied hydrogen peroxide concentration for achieving the desired result must be carefully controlled. The authors have furthermore observed that the application of their described method on different Artemia strains or different batches of a same strain did not result in the same degree of diapauze deactivation. They therefore warn for the risks of generalization when applying the method. A further drawback is that the cysts have to be transferred from the hydration medium, to the hydrogen peroxide solution and subsequently to the hatching medium, which involves quite a lot of extra process steps which must moreover be performed at the right moments.

An object of the present invention is therefore to provide a new method which enables to treat the cysts with hydrogen peroxide to increase the hatching percentage thereof without requiring much process steps and controls in addition to the steps and controls required to perform the conventional hatching process.

To this end said hydrogen peroxide is introduced in the hatching medium in an amount selected within the range between 0.5 and 30 mg/l hatching medium wherein the cysts are incubated in a density of maximally about 5 g cyst dry matter per litre to increase the hatching percentage from X % to a value higher than X %.

The present inventors have found that the introduction of such small amounts of hydrogen peroxide in the hatching medium enable to break diapause in diapauzing cysts and thus to increase the hatching percentage. An important advantage of the use of such low hydrogen peroxide amounts is that the hatching medium does not have to be refreshed after a certain treatment time nor are steps to be taken after such a treatment time to neutralise the hydrogen peroxide. It has indeed been found that when simply leaving the hydrogen peroxide in the hatching medium with the cysts, the concentration thereof will decrease as a result of chemical reactions occurring especially with the cysts so that, when the cysts' shells break, the hydrogen peroxide concentration has decreased to a level which is harmless for the nauplii.

The addition of hydrogen peroxide to the hatching medium is already known per se from Bogatova and Erofeeva (1985). In the experiments described in this article, the dry cysts were incubated for hatching in densities of 8, 10 and 15 g/l. and the hydrogen peroxide was added in amounts of 23, 33, 66, 99, 132 and 247 mg/l. The obtained results showed that with 33, 66 and 99 mg $H_2O_2$/l a considerable increase of the hatching percentage could be obtained. However, according to the authors, an $H_2O_2$ amount of 23 mg/l proved to be insufficient whilst the amounts of 132 and 247 mg/l resulted in a large amount of dead nauplii.

An important disadvantage of the method described in Bogatova and Erofeeva (1985) is that they have limited practical importance when applied in larger scale hatchery systems: according to Van Stappen (1996) the cyst density may be as high as 5 g/l for small volumes (< 20 liter) but should be decreased to maximum 2 g/l for larger volumes, so as to minimise the mechanical injury of the nauplii and to avoid suboptimal water conditions. Because of this, the large cyst densities as incubated in the experiments of Bogatova and Erofeeva (1985) will pose large problems under practical conditions and in particular do not enable to achieve a constant, reliable production of nauplii. Moreover, under the optimal $H_2O_2$ concentrations tested by Bogatova and Erofeeva (1985) the cysts only hatch within a period of 48 hours whereas for practical purposes they should hatch within 24 hours so that every day fresh nauplii can be produced using the same hatching infrastructure. Since an object of the research of Bogatova and Erofeeva (1985) was to reduce the amounts of hydrogen peroxide required to break diapause in diapauzing cysts (compared to by that time known methods wherein the cysts are activated with an amount of 1 kg $H_2O_2$ per kg dry cysts before being hatched), it appears that the high cysts densities are intended, not only to reduce the production surface area, but also to reduce the amount of hydrogen peroxide needed for the activation of the cysts.

According to the present invention, it has however now been found that when using lower cysts densities, in particular cysts densities of 5 g cyst dry matter per litre or preferably lower, the hydrogen peroxide amounts proposed by Bogatova and Erofeeva (1985) to obtain the desired increase of the hatching percentage do no longer provide such an increase of the hatching percentage but rather a decrease. It has further been found quite surprisingly that the hydrogen peroxide amounts which are described by Bogatova and Erofeeva (19851) as being insufficient to break diapause are, in the method according to the invention, on the contrary sufficient to effectively break the diapause in diapauzing cysts. An important advantage of the method according to the invention is therefore that, notwithstanding the fact that the cysts are hatched in a larger amount of hatching medium to make the method effective under practical conditions, it does not require larger quantities of hydrogen peroxide to achieve the required concentration thereof in the hatching medium. In fact, it appears that the diapauzing cysts take up the necessary amount of hydrogen peroxide to break diapause, whether this amount of hydrogen peroxide is added to a relatively small or to a larger volume of hatching medium, so that independent of the volume of hatching medium substantially the same amount of hydrogen peroxide is required per gram cysts.

In a preferred embodiment of the method according to the invention, the selected amount of hydrogen peroxide is lower than 20 mg/l and more particularly lower than 15 mg/l and is higher than 1 mg/l, in particular higher than 2 mg/ l and more particularly higher than 3 mg/l.

The invention further relates to Artemia cysts contained in a packaging and destined to be incubated in a hatching medium in accordance with a method according to the invention to produce free swimming nauplii. These packaged cysts are characterised in that the Artemia cysts are jointly packaged with a quantity of hydrogen peroxide and/or of at least one compound which produces hydrogen peroxide when added to the hatching medium, which quantity is at least sufficient to introduce said amount of hydrogen peroxide in the hatching medium when adding the packaged cysts thereto in a density of upto about 5 g at the most cyst dry matter per litre.

Compared to cysts packaged as such, in particular packaged cysts containing diapauzing and quiescent cysts, the packaged cysts according to the invention have the advantage that a higher hatching percentage can be achieved by the addition of the hydrogen peroxide and/or of at least one compound which produces hydrogen peroxide to the hatching medium. Since this hydrogen peroxide and/or this compound are jointly packaged with the cysts, i.e. in combination therewith, logistic inconveniences for the user such as separate purchasing and storage of the individual components that are to be used in the incubation method are avoided.

In a preferred embodiment of the packaged cysts according to the invention, said quantity of said hydrogen peroxide and/or of said compound is determined in such a manner that when adding this quantity to the hatching medium wherein the packaged cysts are to be incubated, said amount of hydrogen peroxide is introduced therein.

This preferred embodiment eliminates the necessity of available expertise to correctly and timely dose the additive(s) to a given batch of cysts. Since optimal doses may differ between strains of cysts or between batches within the same strain the combined packaging therefore eliminates the risk of sub-optimal and even adverse hatching results e.g. strong overdosing of hydrogen peroxide or hydrogen peroxide producing compounds will severely reduce hatching while minimal overdosing results in a delayed hatching.

Other particularities and advantages of the invention will become apparent from the following description of some particular embodiments of the hatching method and of the packaged cysts according to the present invention. In this description, reference is made to the annexed drawings wherein:

Figure 1 is a graph showing the effect of the time (in hours) of addition of 5 mg/l hydrogen peroxide to a hatching medium, after the start of the incubation of Artemia cysts, including diapauzing cysts, on the hatching of these Artemia cysts;

Figure 2 is a graph showing the dose related effect of hydrogen peroxide added to the hatching medium on the hatching of Artemia cysts including diapauzing cysts;

Figure 3 is a graph showing the decrease of the hydrogen peroxide concentration in a hatching medium to which about 8.5 mg/l hydrogen peroxide was added depending on the density of cysts therein;

Figure 4 is a graph showing the corresponding effect of the density of these cysts on the hatching thereof in the same hatching medium as used for Figure 3 to which about 8.5 mg/l hydrogen peroxide was added;

Figure 5 is a graph similar to the graph of Figure 3 and established for the same hatching medium, to which the same amount of about 8.5 mg/l hydrogen peroxide was added, but for another batch of Artemia cysts containing less diapauzing cysts; and

Figure 6 is similar to Figure 4 but has been established for the cysts used for establishing Figure 5.

The present invention generally relates to a method for producing free swimming Artemia nauplii starting from Artemia cysts containing a number of diapauzing cysts. Just like in the conventional hatching methods, the cysts are incubated in a hatching medium under conditions allowing the cysts to hatch and to release free swimming nauplii within a predetermined incubation period, usually within an incubation period of one day (24 hours). During this incubation period of about 24 hours or less, at least 90 % of the cysts which hatch within an incubation period of 48 hours are preferably hatched within this incubation period. The incubation period starts when the dried cysts or the cysts which are stored in brine (wet cysts) are added to a hatching medium which contains at least water, i.e. when the cysts start to hydrate. Since the composition of the hatching medium and the optimal hatching conditions are generally known by the skilled person and described in the literature, in particular in Van Stappen (1996) as mentioned hereabove, no further description need to be given here of this composition and these conditions. It should be noted however that the cysts can also be hatched under conditions which differ somewhat from the optimal conditions. The cysts may for example be hatched at a temperature of more than 28 °C, for example at a temperature of about 30 °C or in a hatching medium containing more than 35 g of dissolved salts. Although a cyst density of about 2 g/l or somewhat less is preferred under practical conditions, the cyst density may also be higher than 2 g/l but should, in accordance with the invention, not be higher than about 5 g/l.

An essential feature of the method according to the invention is further that a predetermined amount of hydrogen peroxide is introduced in the hatching medium, more particularly an amount of between 0.5 and 30 mg/l. This amount is selected in such a way within this range that it is effective to break diapause in at least a number of the diapauzing Artemia cysts in order to enable also such diapauzing cysts to produce free swimming nauplii within the incubation period. In case the cysts contain a portion of diapauzing cysts, the hatching percentage is increased from X % of the total number of full cysts, when the cysts are hatched in the hatching medium wherein no hydrogen peroxide has been introduced, to a hatching percentage higher than X % when they are hatched in the hatching medium containing the hydrogen peroxide. It will be dear that in the method according to the invention at least a portion of the diapauzing cysts will hatch but not necessarily all the diapauzing cysts which are added to the hatching medium, although it is preferred that as much as possible of the diapauzing cysts will hatch.

In contrast to the prior art methods wherein use was made of 1 or more percent by weight of hydrogen peroxide to increase the hatching percentage by treating the dry cysts before hatching them, the increase of the hatching percentage is achieved in the method according to the invention by providing a relatively low hydrogen peroxide concentration in the hatching medium, more particularly such a hydrogen peroxide concentration which does not need to be washed out since it decreases to a harmless concentration for the nauplii when they reach the E-1 stage. An advantage of the method according to the invention is therefore that the hatching medium does not have to be renewed after a predetermined treatment with hydrogen peroxide or that the hydrogen peroxide does not have to be removed or neutralised after such a treatment. This is especially due to the uptake of hydrogen peroxide by the cysts and further also due to the relatively small amount of hydrogen peroxide which is introduced in the hatching medium compared to the amount of cysts which are hatched therein. Optionally, a compound enhancing the neutralisation of the hydrogen peroxide may however be added after a predetermined treatment period to the hatching medium, in particular after completion of the PED phase, or the hatching medium may be renewed. Such neutralisation or renewal of the hatching medium is however not necessary in the method according to the present invention.

In the method according to the invention, the hydrogen peroxide may be introduced in the hatching medium at the beginning of the incubation period, in particular by introducing the hydrogen peroxide in the hatching medium when adding the cysts thereto. As explained hereinafter, this will be the case when a hydrogen peroxide producing compound is mixed with the dried cysts. The hydrogen peroxide may also be introduced in the hatching medium before adding the cysts thereto. In that case, the amount of hydrogen peroxide introduced in the hatching medium is to be understood the amount of hydrogen peroxide present therein when adding the cysts thereto since, after the addition of the hydrogen peroxide, a portion thereof may have been reacted away. Instead of introducing the hydrogen peroxide in the total amount of hatching medium, it can also be introduced initially in a portion of the hatching medium which is later on diluted to the final volume of hatching medium. In this case, the amount of hydrogen peroxide added or introduced in the hatching medium is expressed in mg per litre of the final volume of hatching medium wherein the cysts are incubated in a density of maximally about 5 g cyst dry matter per litre. In the first portion of hatching medium wherein the hydrogen peroxide is initially introduced, a higher hydrogen peroxide level may be achieved which is however not lethal to the cysts. The cysts can therefore be added to this portion of hatching medium. Before the cysts become sensitive to the hydrogen peroxide level as a result of the hatching process, for example within one hour after the addition of the cysts, the portion of the hatching medium has to be diluted with further hatching medium to achieve the final hatching medium wherein the cysts are incubated in a density of maximally about 5 g cyst dry matter per litre. It should be noted that the first portion of the hatching medium does not have to show the same composition as the final hatching medium and may comprise for example water having a lower salt content as seawater such as for example tap water. When the hydrogen peroxide is not introduced simultaneously with the cysts in the hatching medium, it is introduced therein preferably less than 10 hours, and most preferably less than 8 hours, after the start of the incubation period. The best effects on the hatching percentage are achieved when the hydrogen peroxide is introduced in the hatching medium less than 6 hours and especially less than 5 hours after the start of the incubation period. It will be clear that the total amount of hydrogen peroxide does not have to be introduced at once in the hatching medium but that it can be introduced therein in several times.

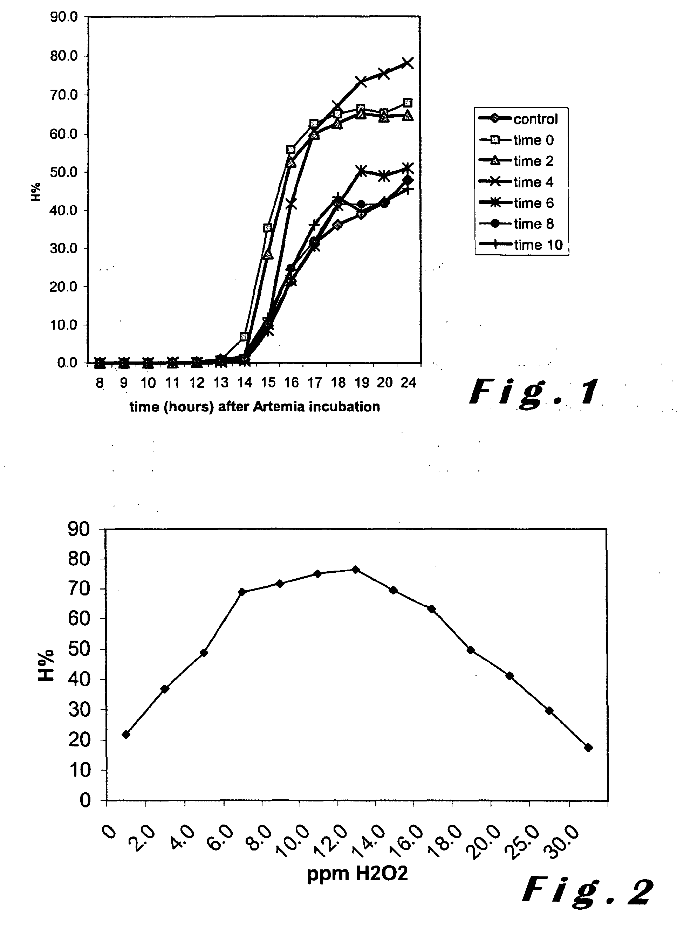

The effect of the time of addition of 5 mg/l $H_2O_2$ to the hatching medium on the hatching percentage (H%) is illustrated in Figure 1. In this example, a series of 1 litre cones was used in which 2 g of Artemia cysts, including diapauzing cysts (moisture content: 7.5%) of a same batch were incubated in filtered seawater (35 ppt). The temperature of the water in the cones was kept constant around 30 °C, the water was constantly aerated and illuminated. For the different $H_2O_2$ treatments, 5 mg of $H_2O_2$ was added to the hatching medium at different times (from 0 till 10 hours) after the start of the incubation of the cysts. Each treatment was done in duplicate with the treatment's result being the average of the duplicates. From Figure 1 it appears that, in this example, addition of $H_2O_2$ at about 4 hours after the start of the incubation gave the highest increase of the hatching percentage measured after 24 hours.

The amount of hydrogen peroxide which is to be introduced according to the invention in the hatching medium in order to obtain the maximum hatching percentage depends from strain to strain or batch to batch of the cysts. In general, this amount of hydrogen peroxide is lower than 30 mg/l, in particular lower than 20 mg/l and more particularly lower than 15 mg/l and higher than 1 mg/l, in particular higher than 2 mg/l and more particularly higher than 3 mg/l. For a same density of cysts in the hatching medium, it depends amongst others from the number of diapauzing cysts and especially also from the depth of diapause, i.e. from the diapauzing stage.

The hydrogen peroxide amount to be introduced in the hatching medium to increase the hatching percentage, in particular the optimal hydrogen peroxide amount providing a maximum hatching percentage of M %, can be determined by taking a number of samples of the cysts and by hatching these samples under substantially identical conditions (same temperature, salt content, cyst density, etc.) in hatching media differing from one another by a different amount of hydrogen peroxide introduced per volume unit therein. Subsequently, the hatching percentages can be determined for the different hydrogen peroxide amounts and the hydrogen peroxide amount which gives the desired increase in hatching percentage, in particular the optimal hydrogen peroxide amount which gives the highest hatching percentage M %, can be selected. Instead of selecting the hydrogen peroxide amount which gives the maximum hatching percentage of M %, it is also possible to select a hydrogen peroxide amount which gives a smaller hatching percentage, in particular a hatching percentage which is at least equal to X % + 0.4*(M - X) % (X % = hatching percentage when no $H_2O_2$ is added) and preferably at least equal to X % + 0.6*(M - X) %, a hydrogen peroxide amount corresponding substantially to said hydrogen peroxide amount which gives said maximum hatching percentage of M % being most preferably selected.

Figure 2 illustrates the dose related effect of $H_2O_2$ on the hatching percentage (H%) of a batch of Artemia cysts containing diapauzing cysts. In this example, 2 g of Artemia cysts with a moisture content of 8.3% were incubated in a series of 1 litre cones under the same hatching conditions as described hereinabove for the example illustrated in Figure 1 (seawater, temperature of about 30 °C, constant aeration and illumination). The hydrogen peroxide was added immediately after the start of the incubation of the cysts. To different cones different amounts of $H_2O_2$ were added going from 0 to 30 g/l. Each treatment was again done in duplicate with the treatment's result being the average of the duplicates.

From Figure 2 it can be deduced that for the used batch of Artemia cysts, the optimal amount of hydrogen peroxide was about 12 mg/l (=ppm) $H_2O_2$ resulting in an increase of the hatching percentage from about 22 % (=X %) to about 76 % (=M %). Above this concentration, the hydrogen peroxide worked toxically for the Artemia nauplii causing again a decrease of the hatching percentage.

In addition to the mutual differences between the different strains or batches of the cysts, it has been found according to the invention that the optimal amount of hydrogen peroxide to be introduced in the hatching medium to achieve the highest hatching percentage is also dependent from the cyst density in the hatching medium. In particular, it has been found that the higher the cyst density, the larger the amount of hydrogen peroxide which has to be introduced per volume unit in the hatching medium. In the method according to the invention, the cyst density is at the most equal to about 5 g cyst dry matter per litre but is preferably less than 4 g cyst dry matter per litre, more preferably less than 3 g cyst dry matter per litre and is most preferably equal to about 2 g cyst dry matter per litre or even less. The present inventors have found that the higher the cyst density, the larger the amount of hydrogen peroxide which has to be introduced per volume unit in the hatching medium and the larger the amount of hydrogen peroxide taken up by the cysts.

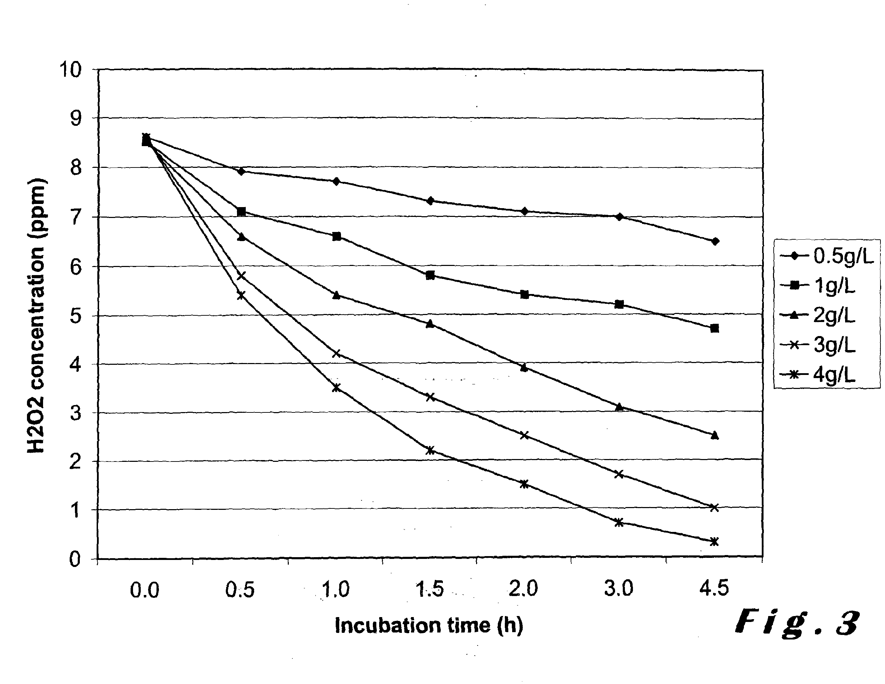

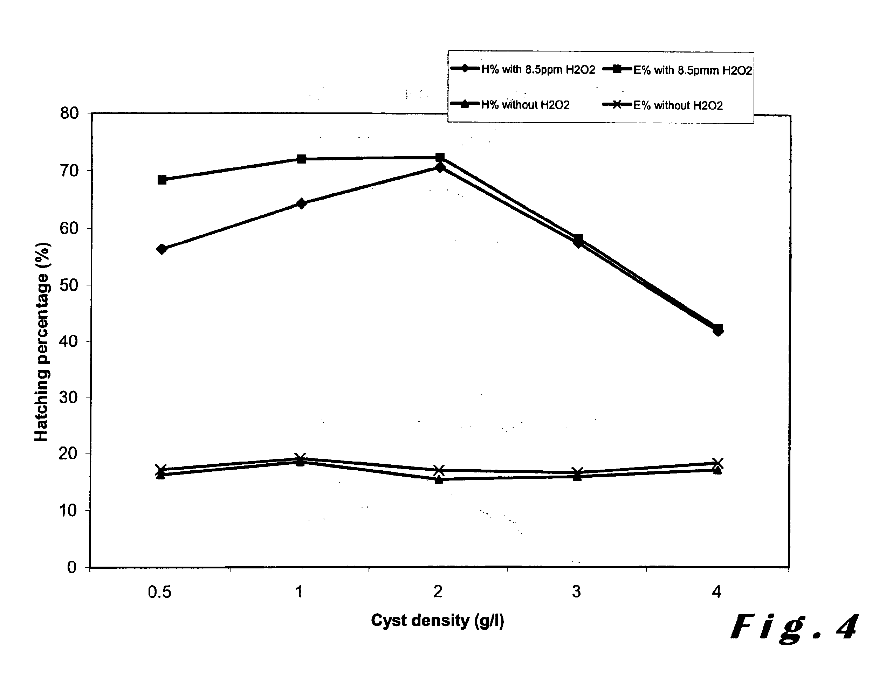

In a next example, a series of 1 litre cones was inoculated with different amounts of cysts, including diapauzing cysts (moisture content of the cysts = 8%), corresponding to densities of 0.5, 1, 2, 3 and 4 g dry cysts/l. For each tested cyst density a set of cones contained no peroxide while in a second set of cones about 8.5 mg/l hydrogen peroxide was added at the start of the incubation. Each combination of cyst density and peroxide was executed in duplicate. Apart from the above total of 20 cones (the experimental treatments) a supplementary 2 cones (the control treatment) were installed containing only the hatching medium and about 8.5 mg/l hydroxide peroxide. In all cones filtered seawater of 35 ppt was used. During the course of the experiments the water was constantly aerated and illuminated and kept at a constant temperature of around 30 °C. In the present example the hydrogen peroxide concentration was measured in every cone at 30 minute intervals until 4.5h following the start of the incubation. The figures in figure 3 present for each experimental treatment the remaining amount of peroxide at the moment of measurement and are obtained by decreasing the average values of the two duplicates with a quantity equal to the average value of the two control. The hatching results for the experimental treatments were counted after 24 hours of incubation (figure 4) with the treatment's result being the average of the duplicates. Figure 3 clearly shows that the decrease in hydrogen peroxide depends on the cyst density. The amount of 8.5 mg/l $H_2O_2$ appears to be too low for a density of 4 g/l since after 4.5 hours, the hydrogen peroxide already disappeared nearly completely. It was found that this should happen preferably after about 8 hours. Since this will be the case for a density of 2 g cysts/l, it can be expected that 8.5 mg/l will be the optimal amount for the treatment of 2 g cysts/l whilst for lower densities, the amount of 8.5 mg/l will be too high.

Figure 4 shows the effect of the hydrogen peroxide treatment on the hatching of the cysts. The hatching results are represented as either hatching percentage (H%: the number of free swimming nauplii that emerge from 100 full cysts) or effect percentage (E%: the total of free swimming nauplii, E2 and E1 stages that are produced out of 100 full cysts). Figure 4 illustrates that without hydrogen peroxide treatment, the batch of cysts had a hatching percentage of about 20 %. When 8.5 mg $H_2O_2$ is added per litre hatching medium, the hatching percentage can get to about 70 % for a density of 2 g/l. At lower densities, the E1 and E2 stages did not further develop because of the too high peroxide concentration which was left in the hatching medium. When E% is substantially higher than H%, an overdose of peroxide was applied. At higher densities, 8.5 mg/l was not high enough to obtain an optimal hatching.

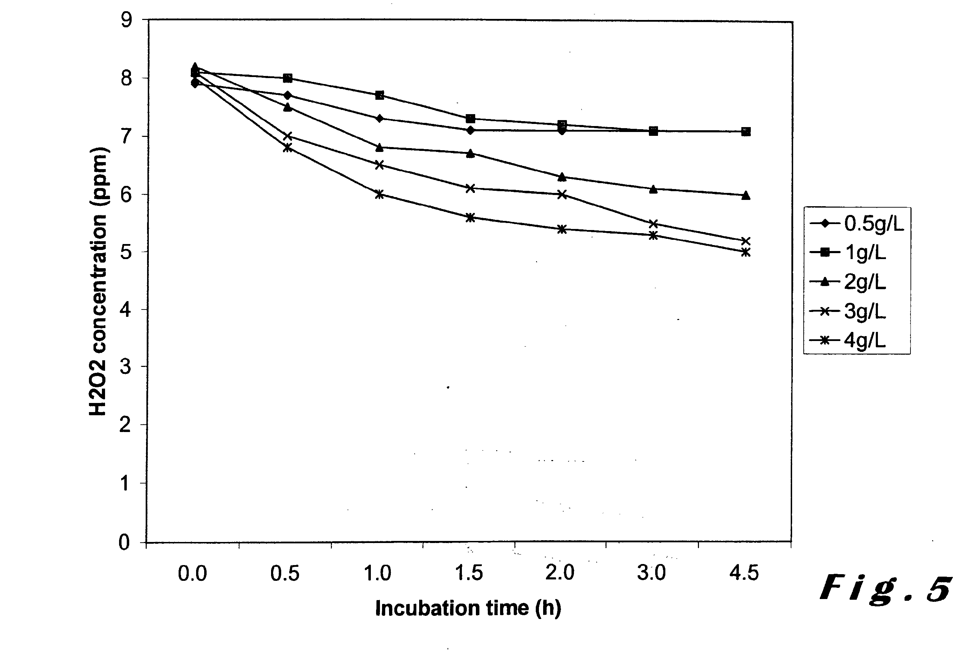

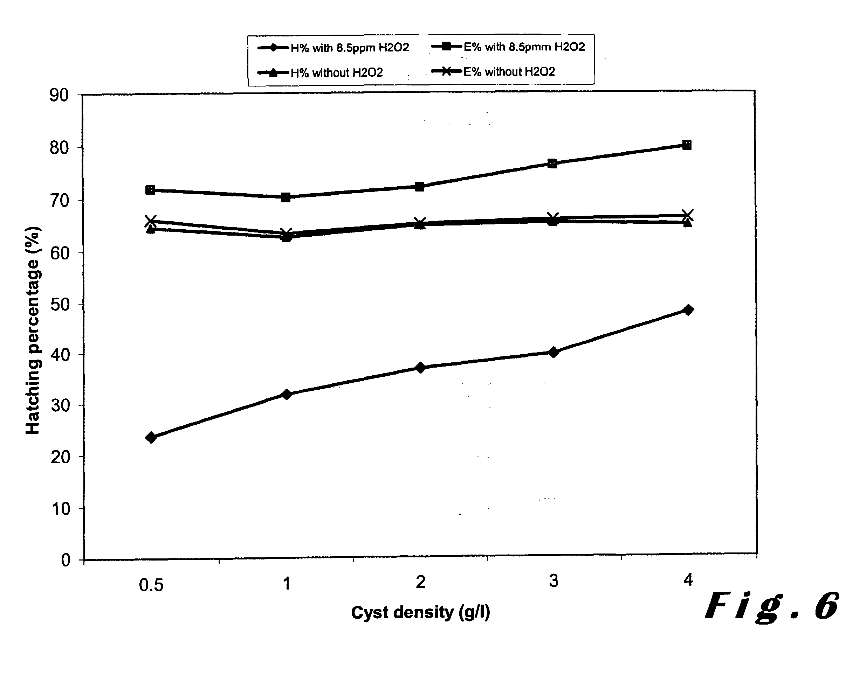

Figure 5 is similar to Figure 3 and illustrates the $H_2O_2$ decrease in the hatching medium depending on the density of the cysts but now for a different batch. Figure 6 is similar to Figure 4 and illustrates the hatching percentages and effect percentages obtained for the different densities of this different batch of cysts. The cysts were hatched under the same conditions as in the previous example and a comparable amount of $H_2O_2$ was added, namely about 8.5 mg/l hatching medium. From Figure 5 it appears that the cysts cause now a considerably smaller decrease of the hydrogen peroxide concentration in the hatching medium and that too much hydrogen peroxide will be left in the hatching medium when E1 nauplii are hatching. Figure 6 shows that for this batch of cysts, the normal hatching percentage (H%) was about 65 %, so that this batch of cysts contained considerably less diapauzing cysts than in the previous example. Apparently, diapauzing cysts take up more hydrogen peroxide than quiescent cysts. From Figure 6 it appears that the amount of hydrogen peroxide was too high, even for a cyst density of 4 g/l, since the percentage of cysts which produced free swimming nauplii (=N1-stage) was smaller than in the case that no hydrogen peroxide was added. Due to the fact that the total amount of the E1 stage, the E2 stage and N1 stage was however increased, an increased hatching percentage can be obtained by using a smaller amount of hydrogen peroxide.

The required amount of hydrogen peroxide can be introduced in the hatching medium by adding a hydrogen peroxide solution thereto. In the method according to the invention, use can however also be made of compounds which produce hydrogen peroxide when added to the hatching medium, in particular hydrogen peroxide producing compounds which contain peroxide links such as peroxides, perborates, persulfates and peracetates. The most preferred hydrogen peroxide producing compounds are magnesium peroxide and especially calcium peroxide. These compounds are available in the form of solid products, containing usually between 50 % and 70 % by weight of the active product. An advantage of such solid products is that they can be mixed with the dried cysts before packaging the cysts in particular in cans. Compared to other solid products magnesium and calcium peroxide have the further advantage of being more stable than for example perborates or persulfates (of potassium or sodium) so that, even when the cans are stored at relatively high temperatures during practically applied periods of time, the capacity of such included magnesium and calcium compounds to produce the required amount of hydrogen peroxide when added to the hatching "medium does not substantially decrease nor will there be a substantial. release of oxygen gas that otherwise would compromise the shelf live of the packaged cysts.

In the above described examples for determining the optimum amount of hydrogen peroxide which is to be introduced in the hatching medium to achieve the maximum hatching percentage, the hydrogen peroxide was introduced therein by adding a hydrogen peroxide solution directly thereto. When use will be made in practice of another compound or product which produces hydrogen peroxide in the hatching medium, the corresponding amount needed of this compound or product can be calculated or can be determined by a simple titration, for example by means of potassium permanganate which reacts with hydrogen peroxide in the hatching medium according to the following reaction:

$$2\ KMnO_4 + 3\ H_2SO_4 + 5\ H_2O_2 \mathrel{<\!\!=\!=\!=\!\!>} 5\ O_2 + 2\ MnSO_4 + K_2SO_4 + 8\ H_2O$$

Alternatively, the tests for determining the amount of hydrogen producing product or compound can also be performed directly with this compound so that no conversion is needed.

The cysts which are destined to be used in the method according to the present invention are preferably contained in a package, in particular in a can, and are combined with a quantity of hydrogen peroxide and/or of at least one compound which produces hydrogen peroxide when added to the hatching medium. Examples of such compounds are given hereinabove: The quantity of the hydrogen peroxide and/or of the other hydrogen peroxide producing compounds is at least sufficient to introduce the above described amounts of hydrogen peroxide in the hatching medium when adding the packaged cysts thereto in a density which comprises at the most about 5 g cyst dry matter per litre. Preferably, the quantity of hydrogen peroxide and/or of the hydrogen peroxide compound which is combined with the cysts is determined in such a manner that when adding this quantity to the hatching medium wherein the packaged cysts are to be incubated, the required amount of hydrogen peroxide is introduced therein. In this way, the total amount of hydrogen peroxide and/or of the hydrogen peroxide producing compound can simply be added with the cysts to the hatching medium, without having to measure the amount thereof.

The quantity of hydrogen peroxide and/or of the hydrogen peroxide producing compound is more particularly determined in such a manner that when adding this quantity to the volume of hatching medium wherein the packaged cysts are to be incubated, an amount of hydrogen peroxide comprised between 0.5 and 30 mg/l is introduced therein. As explained hereinabove, this amount is more particularly selected within this range to increase the hatching percentage from X % of the total number of cysts when the cysts are hatched in the absence of the hydrogen peroxide to a hatching percentage higher than X % when they are hatched in the presence of this amount of hydrogen peroxide. Preferably, the quantity of hydrogen peroxide and/or of the hydrogen peroxide producing compound is determined such that when the cysts are hatched in the presence of the amount of hydrogen peroxide introduced by this quantity in the hatching medium, the hatching percentage is at least equal to X % + 0.4 * (M-X) %, preferably at least equal to X% + 0.6 * (M-X) %, and most preferably substantially equal to M %. As explained already hereabove, M % is the maximum hatching percentage which can be achieved under the applied hatching conditions when introducing an optimal amount of hydrogen peroxide in the hatching medium.

According to the invention, it has been found that the optimal amount of hydrogen peroxide in the hatching medium is strongly dependent from the density of cysts. From the experiments carried out by the inventors it appears indeed surprisingly that the cysts, and in particular the diapauzing cysts, take up the required amount of hydrogen peroxide nearly independent of the concentration of hydrogen peroxide in the hatching medium. This means that one does not have to apply a high cyst density to save hydrogen peroxide since at a lower cyst density, i.e. when using a larger volume of hatching medium, a lower hydrogen peroxide concentration has to be achieved. Depending on the number of diapauzing cysts, the depth of diapause and other on batch to batch or strain to strain differences, the quantity of hydrogen peroxide and/or of the hydrogen peroxide producing compound will comprise and/or produce respectively usually about 0.5 to about 15 mg, in particular about 1 to about 10 mg and more particularly about 1.5 to about 7.5 mg hydrogen peroxide per gram cyst dry matter.

The quantity of hydrogen peroxide and/or of the hydrogen peroxide producing compound can be contained in a further packaging separating this hydrogen peroxide and/or this compound from the cysts but jointly packaged, for example fixed to the outside of the packaging of the cysts. The further packaging may form a separable set with the packaging of the cysts but it is preferably contained, together with the cysts, in the packaging thereof. When a liquid hydrogen peroxide solution is used, it may for example be contained in a glass or plastic vial or vials (bottle) and packed together with the cysts in a can. When use is made of a solid hydrogen peroxide producing compound, this compound may be mixed directly with the cysts either as a powder or a granulate or in a tablet or other solid shape. Of course, it can also be contained for example in capsules mixed with the cysts. Alternatively, the hydrogen peroxide producing compound can further be adhered or in other words coated onto the cysts.

References:

Bogatova, I.B. and Erofeeva, Z.L. (1985) : Incubation of Artemia salina L. diapause eggs without preliminary hatching stimulation (using hydrogen peroxide) (In Russian). - Gidrobiol. Zh. 21:52-56.

Clegg, J.S. 1997. Embryos of Artemia franciscana survive four years of continuous anaoxia : the case for complete metabollic rate depression. J. Exp. Biol. 200 : 467-475.

Clegg, J.S., and F.P. Conte. 1980. A review of the cellular and developmental biology of Artemia. Pages 11-54 in G. Persoone, P. Sorgeloos, O. Roels, and E. Jaspers, eds. The brine shrimp Artemia. Vol. 2. Physiology, biochemistry, molecular biology. Universa, Wetteren, Belgium.

Hofmann, G.E., and S.C. Hand. 1990a. Subcellular differentiation arrested in Artemia embryos under anoxia : evidence supporting a regulatory role for intracellular pH. J. exp. Zool. 253 : 287-302.

Hofmann, G.E., and S.C. Hand. 1990b. Arrest of cytochrome-c oxidase synthesis coordinated with catabolic arrest in dormant Artemia embryos. Am. J. Physiol. 258 : R1184-R1191.

Hand, S.C. 1993. pHi and anabolic arrest during anoxia in Artemia franciscana embryos. In P.W. Hochachka, P.L. Lutz, T. Sick, M. Rosenthal, and G. van den Thillart. Surviving Hypoxia. Mechanisms of control and adaptation. CRC Press, Boca Raton, Florida, USA.

Nakanishi, Y.H., T. Iwasaki, T. Okigaki, and H. Kato (1962) Cytological studies of Artemia salina. I. Embryonic development without cell multiplication after the blastula stage in encysted dry eggs. Annot. Zool. Jpn., 223-228.

Nakanishi, Y.H., T. Okigaki, H. Kato, and T. Iwasaki, (1963) Cytological studies of Artemia salina. I. Deoxyribonucleic acid content and the chromosomes in encysted dry eggs and nauplii. Proc. Japan. Acad. Sci. 39: 306-309

Sorgeloos, P., Lavens, P., Léger, PH., Tackaert, W. and Versichele, D. (1986) : Manual for the culture and use of shrimp Artemia in aquaculture. - p. 319, Artemia Reference Center, State University of Ghent, Belgium.

Van Stappen, G. Introduction, biology and ecology of Artemia. (1996) in: Manual on the production and use of live food for aquaculture. Edited by Lavens, P. and Sorgeloos, P. Laboratory of Aquaculture and Artemia Reference Center, University of Ghent, Belgium, p. 79-136.

Van Stappen, G.; Lavens, P. and Sorgeloos, P. (1998). Effects of hydrogen peroxide treatment in Artemia cysts of different geographical origin. Arch. Hydrobiol. Spec. Issues Advanc. Limnol. 52, p. 281-296.

**Claims**

1. A method for producing free swimming Artemia nauplii starting from a quantity of Artemia cysts, including diapauzing cysts, by incubating the cysts in a hatching medium, in a density which comprises maximally about 5 g cyst dry matter per litre hatching medium, for a predetermined incubation period and under conditions allowing at least a portion of the cysts to hatch and to release free swimming nauplii within this predetermined incubation period, in which method the cysts are brought in contact with hydrogen peroxide to break diapause in at least a number of said diapauzing cysts in order to enable them to produce free swimming nauplii within said predetermined incubation period thereby increasing the hatching percentage of the incubated cysts from X % of the total number of full cysts when the cysts are not brought in contact with said hydrogen peroxide to a hatching percentage higher than X % when they are brought in contact with said hydrogen peroxide, **characterised in that** said hydrogen peroxide is introduced in the hatching medium in an amount selected within the range between 0.5 and 30 mg/l hatching medium wherein the cysts are incubated in a density of maximally about 5 g cyst dry matter per litre to increase the hatching percentage from X % to a value higher than X %.

2. A method according to claim 1, **characterised in that** the selected amount of hydrogen peroxide is lower than 20 mg/l and more particularly lower than 15 mg/l and is higher than 1 mg/l, in particular higher than 2 mg/l and more particularly higher than 3 mg/l.

3. A method according to claim 1 or 2, **characterised in that** the cysts are hatched in said hatching medium in a density of less than 4 g cyst dry matter per litre, in particular in a density of less than 3 g cyst dry matter per litre and preferably in a density of about 2 g or less cyst dry matter per litre.

4. A method according to any one of the claims 1 to 3, **characterised in that** said cysts comprise such an amount of diapauzing cysts that by introducing an optimal amount of hydrogen peroxide in the hatching medium, the hatching percentage can be increased from X % to a maximum hatching percentage of M % and said amount of hydrogen peroxide is selected within said range to increase the hatching percentage from X % to a hatching percentage which is at least equal to X % + 0.4*(M - X) %, and preferably to a hatching percentage which is at least equal to X % + 0.6*(M - X) %.

5. A method according to claim 4, **characterised in that** said maximum hatching percentage is determined by taking a number of samples of the cysts, by hatching these samples in hatching media differing from one another by a different amount of hydrogen peroxide introduced per volume unit therein and situated within said range, by determining the hatching percentages for the different hydrogen peroxide amounts, and by selecting the highest hatching percentage amongst the determined hatching percentages.

6. A method according to any one of the claims 1 to 3, **characterised in that** for selecting said amount of hydrogen peroxide, a number of samples of the cysts are taken, these samples are hatched in hatching media differing from one another by a different amount of hydrogen peroxide introduced per volume unit therein and situated within said range, the hatching percentages are determined for the different hydrogen peroxide amounts and the maximum percentage M % amongst these hatching percentages, and a hydrogen peroxide amount is selected which increases the hatching percentage from X % to a value higher than X %, in particular a hydrogen peroxide amount which gives either the maximum hatching percentage of M % or a hatching percentage which is at least equal to X % + 0.4*(M - X) % and preferably at least equal to X % + 0.6*(M - X) %, a hydrogen peroxide amount corresponding substantially to said hydrogen peroxide amount which gives said maximum hatching percentage of M % being most preferably selected.

7. A method according to any one of the claims 1 to 6, **characterised in that** said hydrogen peroxide is introduced in the hatching medium by adding hydrogen peroxide and/or at least one compound to this medium which produces hydrogen peroxide in the hatching medium, the hydrogen peroxide being preferably introduced in the hatching medium by adding at least one hydrogen peroxide producing compound which contains a peroxide link and which is selected more particularly from the group comprising peroxides, perborates, persulfates, peracetates or combinations thereof to the hatching medium, the hydrogen peroxide producing compound comprising most preferably calcium and/or magnesium peroxide.

8. A method according to any one of the claims 1 to 7, **characterised in that** said hydrogen peroxide is introduced in the hatching medium less than 10 hours, preferably less than 8 hours, more preferably less than 6 hours and most preferably less than 5 hours after having started to incubate the cysts therein.

9. A method according to any one of the claims 1 to 8, **characterised in that** said predetermined incubation period is a period of about 24 hours or less and at least 90 % of the cysts which hatch within an incubation period of 48 hours are hatched within this predetermined incubation period.

10. Artemia cysts contained in a packaging and destined to be incubated in a hatching medium in accordance with a method according to any one of the claims 1 to 9 to produce free swimming nauplii, **characterised in that** the Artemia cysts are jointly packaged with a quantity of hydrogen peroxide and/or of at least one compound which produces hydrogen peroxide when added to the hatching medium, which quantity is at least sufficient to introduce said amount of hydrogen peroxide in the hatching medium when adding the packaged cysts thereto in a density of upto about 5 g at the most cyst dry matter per litre.

11. Packaged cysts according to claim 10, **characterised in that** said quantity of said hydrogen peroxide and/or of said compound is contained in a further packaging separating this hydrogen peroxide and/or this compound from the cysts.

12. Packaged cysts according to claim 10 or 11, **characterised in that** said quantity of said hydrogen peroxide and/ or of said compound is contained in the same packaging as the cysts and is in particular mixed with the cysts or adhered thereto.

13. Packaged cysts according to any one of the claims 10 to 12, **characterised in that** said quantity of said hydrogen peroxide and/or of said compound is determined in such a manner that when adding this quantity to the hatching medium wherein the packaged cysts are to be incubated, said amount of hydrogen peroxide is introduced therein.

14. Packaged cysts according to claim 13, **characterised in that** said quantity of said hydrogen peroxide and/or of said compound comprises and/or produces about 0.5 to about 15 mg, preferably about 1 to about 10 mg and most preferably about 1.5 to about 7.5 mg hydrogen peroxide per gram cyst dry matter, which quantity is preferably mixed with the cysts or adhered thereto.

15. Packaged cysts according to claim 13 or 14, **characterised in that** said quantity of said hydrogen peroxide and/ or of said compound is determined in such a manner that when adding this quantity to the hatching medium wherein the packaged cysts are to be incubated, an amount of hydrogen peroxide comprised between 0.5 and 30 mg/l is introduced therein, which amount of hydrogen peroxide increases the hatching percentage from X % of the total number of full cysts when the cysts are hatched in the absence of hydrogen peroxide to a hatching percentage higher than X % when they are hatched in the presence of said amount of said hydrogen peroxide.

16. Packaged cysts according to claim 15, **characterised in that** said cysts comprise such an amount of diapauzing cysts that by introducing an optimal amount of hydrogen peroxide in the hatching medium, the hatching percentage can be increased from X % to a maximum hatching percentage of M % and said amount of hydrogen peroxide is such that when the cysts are hatched in the presence thereof the hatching percentage is at least equal to X % + $0.4*(M - X)$ %, and preferably at least equal to X % + $0.6*(M - X)$ %.

17. Packaged cysts according to any one of the claims 10 to 16, **characterised in that** the Artemia cysts are contained in said packaging in combination with an amount of at least one compound which produces hydrogen peroxide when added to the hatching medium, said hydrogen peroxide producing compound containing preferably a peroxide link and is more particularly selected from the group comprising peroxides, perborates, persulfates, peracetates or combinations thereof, the hydrogen peroxide producing compound comprising most preferably calcium and/or magnesium peroxide.

*Fig.1*

*Fig.2*

*Fig. 3*

*Fig. 4*

**Fig. 5**

**Fig. 6**

**European Patent Office**

## EUROPEAN SEARCH REPORT

Application Number

EP 00 87 0224

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 4 593 647 A (SORGELOOS) 10 June 1986 (1986-06-10) * column 8, line 15-22; figure 1 * | 10-17 | A01K61/00 |
| A | DATABASE WPI Week 198941 Derwent Publications Ltd., London, GB; AN 1989-299486 XP002159185 & SU 1 472 011 A (AZOVSK NII RYBNOGO KHOZ) , 15 April 1989 (1989-04-15) * abstract * | 1 | |
| A | DATABASE WPI Week 198744 Derwent Publications Ltd., London, GB; AN 1987-310962 XP002159186 & JP 62 220155 A (NISSHIN OIL MILLS LTD), 28 September 1987 (1987-09-28) * abstract * | 1 | |

**TECHNICAL FIELDS SEARCHED (Int.Cl.7)**

A01K

The present search report has been drawn up for all claims

| Place of search | Date of completion of the search | Examiner |
|---|---|---|
| THE HAGUE | 1 February 2001 | von Arx, V. |

EPO FORM 1503 03.82 (P04C01)

## ANNEX TO THE EUROPEAN SEARCH REPORT
## ON EUROPEAN PATENT APPLICATION NO.

EP 00 87 0224

This annex lists the patent family members relating to the patent documents cited in the above-mentioned European search report.
The members are as contained in the European Patent Office EDP file on
The European Patent Office is in no way liable for these particulars which are merely given for the purpose of information.

01-02-2001

| Patent document cited in search report | | Publication date | Patent family member(s) | | Publication date |
|---|---|---|---|---|---|
| US 4593647 | A | 10-06-1986 | NL | 8203710 A | 16-04-1984 |
| | | | AT | 25916 T | 15-04-1987 |
| | | | DE | 3370274 D | 23-04-1987 |
| | | | EP | 0104702 A | 04-04-1984 |
| | | | JP | 59078635 A | 07-05-1984 |
| | | | PH | 20724 A | 30-03-1987 |
| SU 1472011 | A | 15-04-1989 | NONE | | |
| JP 62220155 | A | 28-09-1987 | JP | 1740766 C | 15-03-1993 |
| | | | JP | 4025768 B | 01-05-1992 |

EPO FORM P0459

For more details about this annex : see Official Journal of the European Patent Office, No. 12/82